# EUROPEAN PATENT APPLICATION

(11) **EP 2 120 142 A2**
(43) Date of publication of application: **18.11.2009**
(21) Application number: 09250909.0
(22) Date of filing: 27.03.2009
(51) Int. Cl.: G06F 9/44

(54) **Location-aware device**

(30) Priority: 15.05.2008 US 121080
(71) Applicant: Sony Corporation, Tokyo 108-0075 (JP); Sony Electronics, Inc., Park Ridge, NJ 07656 (US)
(72) Inventor: Almstrand, Cristian Lars, San Diego, CA 92130 (US); Venkatesan, Prem, San Diego, CA 92127 (US)
(74) Representative: Turner, James Arthur

(57) **Abstract**

The user interface of a location-aware device (e.g., a wireless telephone) is intelligently altered/configured based on the current location of the device, movement of the device, and/or current date/time. The user interface is automatically changed by activating a specific function and/or displaying a specific set of menu items as a result of a combination of the device's location and/or velocity and/or acceleration and/or direction of movement and/or current date/time.

## Description

The present invention relates to location-aware devices.

As understood herein, an increasing number of functionalities are being added to increasingly capable devices such as, e.g., video players, music players, personal video recorders, cameras, wireless telephones, etc. Typically, graphical user interfaces (GUI) are provided to enable users to select which function the user wishes to invoke. A GUI ordinarily includes a visual display presented on the device and listing available functions, with a user being able to input a selection by, e.g., touching the screen or navigating a cursor over the desired function.

As further understood herein, given this large set of available modes and functions from which to select options, a GUI employing a hierarchical menu is rendered inefficient.

Various respective aspects and features of the invention are defined in the appended claims. Combinations of features from the dependent claims may be combined with features of the independent claims as appropriate and not merely as explicitly set out in the claims.

In accordance with present principles, usage modes and functions a user is most likely to seek can be intelligently predicted and quick links to predicted modes/functions can be automatically displayed on a GUI.

Accordingly, a location-aware device includes a housing, a processor in the housing, and a clock in the housing inputting temporal parameter information to the processor. Also, a position receiver is in the housing and inputs geographic position information to the processor. A display is associated with the housing. A user interface can be presented on the display under control of the processor. The processor presents the user interface on the display based on information from the position receiver and/or information from the clock.

In some embodiments the user interface is automatically changed by activating a specific function and/or by displaying a specific set of menu items as a result of the device's location plus device velocity, device acceleration, device direction of movement, and current date/time.

User interface changes may be pre-programmed by a device manufacturer or uploaded to the device or established by the processor based on usage patterns. For instance, if information from the position receiver indicates velocity of the device is at least as fast as a threshold, a navigation mode GUI is presented on the display. As another example, if information from the position receiver indicates velocity of the device is below a threshold, a user interface is displayed based on statistical information regarding what operations the user has previously performed at a given location. With even more specificity, the user interface can be is related to a most frequently executed operation at the location, with a link to a user interface related to a next-frequently operation being presented on the user interface related to the most frequently executed operation. If desired, the user interface may be based on time parameter information received from the clock. As yet a further example, if the processor, based on position information from the position receiver, detects a transition from relatively high speed movement to relatively slow speed movement at a particular location, a navigation GUI may be automatically activated when the device returns to the particular location.

In another aspect, a method includes providing a location-aware device and establishing a user interface of the location-aware device based on a geographic location of the device.

In another aspect, an apparatus includes a processor receiving position information and temporal parameter information. A display on which a user interface can be presented under control of the processor is also provided. The processor presents a user interface on the display based on the position information.

Embodiments of the present invention, as regards both its structure and operation, can best be understood in reference to the accompanying drawings, in which like reference numerals refer to like parts, and in which:
Figure 1 is a block diagram of a first non-limiting device in accordance with present principles;
Figure 2 is a block diagram of a first non-limiting device in accordance with present principles;
Figure 3 is a flow chart of example logic in accordance with present principles; and
Figures 4-6 are example GUIs that can be displayed in accordance with the logic of Figure 3.

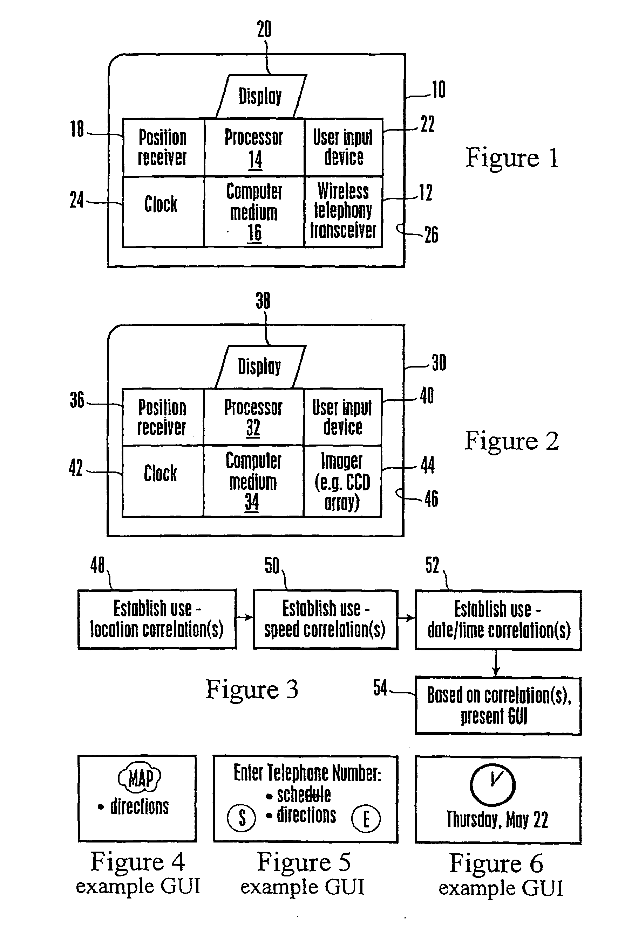

Figure 1 shows a device 10 that may embody present principles. Without limitation and by way of example only, the device 10 may be an audio player, a still camera or a video camera, a computer, a music player, a personal video recorder (PVR), a personal digital assistant (PDA), a portable TV, a game player, a video player, or as specifically shown in Figure 1, a wireless telephone. The device 10 when configured as a wireless telephone may be, without limitation, a global systems for mobile communications (GSM) telephone, a code division multiple access (CDMA) telephone, a time division multiple access (TDMA) telephone, a frequency division multiple access (FDMA) telephone, a space division multiple access (SDMA), a wideband-CDMA telephone, an orthogonal frequency division multiplexing (OFDM) telephone, etc. and accordingly includes a wireless telephony transceiver 12 for communicating with wireless telephony base stations in accordance with principles known in the art.

The telephony transceiver 12 may be controlled by a processor 14 accessing data and/or computer instructions embodying the present logic and stored on a tangible computer readable medium 16 such as solid state storage, disk storage, or other appropriate electronic storage. In some embodiments the device 10 includes a position receiver 18 such as a global positioning satellite (GPS) receiver providing input to the processor 14. The device 10 may also include a display 20 such as a liquid crystal display (LCD) or light emitting diode (LED) display or other type of matrix display that is controlled by the processor 14, as well as a user input device 22 such as a telephone keypad for inputting user commands to the processor 14. The processor 14 may also access temporal parameter information such as date and time information from an electronic clock 24. The above-described components typically are contained on a portable hand-held housing 26.

To illustrate that present principles may be used with other devices, Figure 2 shows a device 30 implemented as a camera. The device 30 may include a processor 32 accessing data and/or computer instructions embodying the present logic and stored on a tangible computer readable medium 34 such as solid state storage, disk storage, or other appropriate electronic storage. In some embodiments the device 30 includes a position receiver 36 such as a global positioning satellite (GPS) receiver providing input to the processor 32. The device 30 may also include a display 38 such as a liquid crystal display (LCD) or light emitting diode (LED) display or other type of matrix display that is controlled by the processor 32, as well as a user input device 40 such as a telephone keypad for inputting user commands to the processor 32. The processor 14 may also access date and time information from an electronic clock 42. The processor 32 may also receive information from an imager 44 such as a charge coupled device (CCD) array 44. The above-described components typically are contained on a portable hand-held housing 46.

Now referring to Figure 3, the present logic for making a location-aware (e.g., GPS) device (e.g., the wireless telephone device 10 shown in Figure 1) intelligently alter/configure a user interface based on its current location and/or movement and/or current date/time is shown. The user interface is automatically changed by activating a specific function and/or displaying a specific set of menu items as a result of one or more of the device's location, velocity, acceleration, direction of movement, and current date/time. The user interface changes can be pre-programmed by the device manufacturer, uploaded to the device using, e.g., the transceiver 12 shown in Figure 1, or automatically learned by a device processor disclosed herein based on usage patterns, as explained in further detail below.

Block 48 indicates that use-location correlations are established. Initially, default correlations set by the manufacturer may be used. Essentially, it is noted, for particular locations in which, e.g., the device processor, based on information from the device position receiver, regularly finds itself, the particular functions or uses of the device are employed by the user. These correlations may be effected by the device processor or remotely using position and use information that the device processor uploads to a server.

Similarly, use-speed (and if desired use-acceleration) correlations are established at block 50 and time of day (and if desired day of the week) use correlations are established at block 52. A GUI is presented on the display of the device at block 54 based on the correlations.

Figures 4-6 provide example illustrations. Assume a user is in his car, and the device detects fast movement (faster than, e.g., walking, running, and biking) by means of observing position input changes from the position receiver 18 over time provided by the clock 24. Inferring that a speed above a threshold indicates travel, when the user turns on the device, a navigation mode GUI is presented as shown in Figure 4.

On other hand, a speed below a threshold might indicate that the user is not moving and thus is likely at home or at work. The device logs statistical information regarding what operations the user has previously performed at a given location and based on this statistical information determines what GUI should be presented. For example, suppose that the N (in this example N=3) most often performed tasks at a particular location have been: 1) make phone call [60% of the time], schedule meeting [20% of the time], and look up directions [5% of the time]. With this correlation, when the user turns on the device within a threshold radius of the particular location, the device automatically enters a mode corresponding to the most likely use, in this case, "phone mode", in which a phone GUI is presented as shown in Figure 5. Furthermore, if desired, as also shown in Figure 5 the GUI can contain quick-links to the other uses correlated to the particular location, in this case, links to "schedule meeting" and "look up directions" functionalities.

The above use case can further include allowing the date and time determine which device mode to activate and which menu options to present. For example, the device may determine that a user frequently requests the device to display the current time when at a static (non-moving) location early on a Monday-Friday morning. A "clock" mode GUI as shown in Figure 6 accordingly can be automatically be shown if no other mode has been selected at this time. Similarly, the device may determine that a user frequently sets the device's alarm when located at a static location late in the evening on a Sunday-Thursday evening. A GUI facilitating the setting of an alarm consequently automatically can be shown if no other mode has been selected at this time.

Returning to use-speed correlations, in the event that a device detects a transition from a high-speed movement (e.g., driving a car) to a slow-speed movement (e.g., walking) at a particular location, the "navigation mode" may be automatically activated the next time the user returns to the same location, under the inference that the user parked his car at that location and will require navigation assistance the next time he returns to the location presumably to drive away.

While the particular DYNAMICALLY CHANGING A USER INTERFACE BASED ON DEVICE LOCATION AND/OR DATE/TIME is herein shown and described in detail, it is to be understood that the subject matter which is encompassed by the present invention is limited only by the claims.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. A location-aware device comprising:
a housing;
a processor in the housing;
a clock in the housing and inputting temporal parameter information to the processor;
a position receiver in the housing and inputting geographic position information to the processor; and
a display associated with the housing and on which a user interface can be presented under control of the processor, wherein
the processor presents the user interface on the display based at least in part on one or more of: information from the position receiver, information from the clock.

2. The device of Claim 1, wherein the user interface is automatically changed by activating a specific function and/or by displaying a specific set of menu items as a result of the device's location plus device velocity, device acceleration, device direction of movement, and current date/time.

3. The device of Claim 1, wherein if information from the position receiver indicates velocity of the device is below a threshold, the user interface is displayed based on statistical information regarding what operations the user has previously performed at a given location.

4. The device of Claim 3, wherein the user interface is related to a most frequently executed operation at the location, with a link to a user interface related to at least one next-frequently operation being presented on the user interface related to the most frequently executed operation.

5. The device of Claim 3, wherein the user interface is further based on time parameter information received from the clock.

6. A method comprising:
providing a location-aware device; and
establishing a user interface of the location-aware device based on a geographic location of the device.

7. The method of Claim 6, wherein the user interface is also based on movement of the device.

8. Apparatus comprising:
a processor receiving position information and temporal parameter information;
a display associated with the processor on which a user interface can be presented under control of the processor, wherein
the processor presents a user interface on the display based on the position information.

9. The apparatus of Claim 8 or the method of Claim 6, wherein the user interface is based on the temporal parameter information.

10. The apparatus of Claim 8 or the device of Claim 1, wherein user interface changes are pre-programmed by a device manufacturer.

11. The apparatus of Claim 8 or the device of Claim 1, wherein user interface changes are uploaded to the apparatus.

12. The apparatus of Claim 8 or the device of Claim 1, wherein user interface changes are established by the processor based on usage patterns.

13. The apparatus of Claim 8 or the device of Claim 1, wherein if information from the position receiver indicates velocity of the device is at least as fast as a threshold, a navigation mode user interface is presented on the display.

14. The apparatus of Claim 13, wherein the user interface is displayed based on statistical information regarding what operations the user has previously performed at a given location.

15. The device or apparatus of Claim 13, wherein if the processor, based on position information from the position receiver, detects a transition from relatively high speed movement to relatively slow speed movement at a particular location, a navigation user interface is automatically activated when the device returns to the particular location.
